# EUROPÄISCHE PATENTSCHRIFT

(11) **EP 2 104 811 B1**
(45) Veröffentlichungstag und Bekanntmachung des Hinweises auf die Patenterteilung: **30.08.2017**
(21) Anmeldenummer: 07848071.2
(22) Anmeldetag: 12.12.2007
(51) Int. Cl.: F25B 49/02, F25D 11/02, F25D 29/00

(54) **KÄLTEGERÄT UND VERFAHREN ZUM STEUERN EINES KÄLTEGERÄTS**
REFRIGERATION DEVICE AND METHOD FOR CONTROLLING A REFRIGERATION DEVICE
APPAREIL RÉFRIGÉRANT ET PROCÉDÉ DE COMMANDE

(30) Priorität: 22.12.2006 DE 102006061160
(43) Veröffentlichungstag der Anmeldung: 30.09.2009
(73) Patentinhaber: BSH Hausgeräte GmbH, 81739 München (DE)
(72) Erfinder: HAUSMANN, Georg, 89434 Blindheim (DE); IHLE, Hans, 89537 Giengen (DE)
(86) Internationale Anmeldenummer: PCT/EP2007/063754
(87) Internationale Veröffentlichungsnummer: WO 2008/077778

(56) Entgegenhaltungen:
- EP-A- 0 192 526
- FR-A- 2 617 581
- JP-A- 6 003 015
- JP-A- 2005 106 454
- US-A- 2 274 336

## Beschreibung

Die Erfindung betrifft ein Kältegerät nach dem Oberbegriff von Anspruch 1 bzw. ein Verfahren zum Steuern eines Kältegeräts nach dem Oberbegriff von Anspruch 8.

Es sind Kältegeräte bekannt geworden, die zwei separate Kältemittelkreisläufe mit Verdichter, Verdampfer und Verflüssiger aufweisen. Der Innenraum solcher Kältegeräte ist üblicherweise in zwei Kältezonen unterteilt, die als Gefrierfach und als Kühlfach ausgebildet sind. In jeder Kältezone ist einer der beiden Verdampfer vorgesehen.

Eine Steuerung ermittelt über Temperatursensoren in den beiden Kältezonen die dort vorherrschenden Temperaturen. Steigen die Temperaturen über die jeweils voreingestellte Maximaltemperatur so setzt die Steuerung den jeweiligen Verdichter in Betrieb um Wärme aus der betreffenden Kältezone über das Kältemittel abführen zu können. Ist in beiden Kältezonen zeitnah die voreingestellte Maximaltemperatur erreicht, so werden beide Verdichter so angesteuert, dass sie zumindest über einen bestimmten Zeitraum gleichzeitig arbeiten. Dabei entstehen oft störende Vibrationen. Ebenso liegt der Geräuschpegel bei zwei gleichzeitig arbeitenden Verdichtern auf einem Niveau, das oft als zu laut empfunden wird.

Das Dokument US 2,274,336 zeigt ein Kältegerät mit mehreren Kühlbereichen, welche jeweils einen Verdampfer aufweisen und von mehreren Verdichtern, insbesondere mit unterschiedlicher Kälteleistung, über eine gemeinsame Leitung versorgt werden. Der Kältebedarf wird erfasst und das Kältegerät wird zu jedem Zeitpunkt mit einer minimalen Anzahl von aktiven Verdichtern betrieben.

Das Dokument EP 0 192 526 A1 zeigt einen Kühlschrank mit drei Kältezonen, wobei in jeder Kältezone ein Verdampfer angeordnet ist. Die drei Verdampfer sind in zwei getrennten Kältemittelkreisläufen, die gleichzeitig betrieben werden können, angeordnet.

Das Dokument JP 2005 106454 zeigt einen Kühlschrank mit zwei getrennt voneinander angeordneten Kühlzonen, wobei jede Kühlzone mittels eines unabhängigen Kühlkreislaufes gekühlt wird.

Das Dokument JP 06 003015 zeigt zwei Kühlschränke, welche parallel miteinander verschaltet sind. Die beiden Kompressoren können gleichzeitig betrieben werden, aber nicht gleichzeitig gestartet werden, womit gleichzeitige hohe Anlaufströme vermieden werden.

Das Dokument FR 2617581 zeigt ein Kältegerät umfassend ein Gefrierfach und ein Kühlfach. Das Kühlfach und das Gefrierfach sind mittels einer Trennwand voneinander abgetrennt. Die Trennwand kann geöffnet werden. Zwei Kompressoren in einem gemeinsamen Kühlkreislauf werden unabhängig voneinander gesteuert.

Der Erfindung liegt die Aufgabe zugrunde, ein Kältegerät und ein Verfahren zur Steuerung eines Kältegeräts so auszugestalten, dass die zwei Verdichter nur in Ausnahmesituationen zeitgleich arbeiten, während sie bei normalen Bedingungen grundsätzlich zu unterschiedlichen Zeiten betrieben werden.

Gelöst wird die Aufgabe gemäß der Erfindung durch ein Kältegerät mit den Merkmalen von Anspruch 1 bzw. ein Verfahren zur Steuerung eines Kältegeräts mit den Merkmalen von Anspruch 7. Dadurch dass die Steuerung in Abhängigkeit von vorbestimmten Bedingungen in unterschiedlichen Arbeitsmoden betreibbar ist, wird es möglich, dass die Steuerung auf unterschiedliche Bedingungen auch unterschiedlich reagiert. So ist erfindungsgemäß ein Normalmodus vorgesehen, in dem die Steuerung die Verdichter nur zeitlich getrennt betreibt. Ein gleichzeitiges Arbeiten beider Verdichter kann damit unter Normalbedingungen ausgeschlossen werden. Trotzdem verbleibt für die Steuerung die Möglichkeit, bei außerordentlichen Bedingungen, also im Ausnahmefall, auch beide Verdichter gemeinsam zu betreiben. Damit lässt sich verhindern, dass die Temperatur in den Kältezonen bei außerordentlichen Umständen zu stark ansteigt, und so die eingelagerte Ware Schaden nimmt. Unter normalen Bedingungen dagegen werden die starken Vibrationen und der hohe Geräuschpegel bei zwei gleichzeitig laufenden Verdichtern vermieden.

Ein Kältemittelkreislauf ist mit einem Verdichter und einem Verdampfer für ein Gefrierfach, der andere Kältemittelkreislauf mit einem Verdichter und einem Verdampfer für ein Kühlfach ausgestattet. Gemäß der Erfindung sind beide Kältemittelkreisläufe mit einem eigenen Verflüssiger versehen.

Sowohl in dem Gefrierfach als auch in dem Kühlfach ist je ein Temperatursensor vorgesehen. Die Steuerung ist mit den beiden Sensoren verbunden und ist so dazu imstande, jederzeit die in dem Gefrierfach bzw. Kühlfach vorherrschende Temperatur zu ermitteln. Üblicherweise sind die Temperatursensoren direkt an dem Verdampfer angebracht und messen die Temperatur des Kältemittels. Über diese Messung lässt sich auf die Temperatur in dem Gefrier- bzw. Kühlfach schließen. In einem vorteilhaften Ausführungsbeispiel der Erfindung ist die Steuerung mit einem Sensor zur Erfassung der Außentemperatur verbunden. Die Außentemperatur stellt in diesem Ausführungsbeispiel eine der vorbestimmten Bedingungen dar von denen der Arbeitsmodus abhängt, in dem die Steuerung betrieben wird. So lässt sich beispielsweise einstellen, dass die Steuerung den Normalmodus verlässt, sobald die Außentemperatur 30 °C überschreitet. Bei einer Außentemperatur in dieser Größenordnung kann es vorkommen, dass die Innentemperatur in dem Gefrier- bzw. Kühlfach so schnell ansteigt, dass die zulässige Maximaltemperatur erreicht wird, bevor in dem jeweils anderen Fach die zum Ausschalten des Verdichters notwendige niedrige Temperatur erreicht ist. Bei solchen außergewöhnlichen Bedingungen wird es der Steuerung erfindungsgemäß ermöglicht in einen anderen Modus zu schalten und ausnahmsweise den Betrieb der beiden Verdichter parallel zuzulassen.

Solche außergewöhnlichen Umstände sind jedoch nicht nur von der Außentemperatur abhängig. Außergewöhnliche Umstände treten ebenfalls dann auf, wenn beispielsweise eine große Menge warmer Ware auf einmal eingelagert wird. Auch können solche Umstände auftreten, wenn sich an den Verdampfern eine Eisschicht bildet, und so der Wärmeübergang auf das Kältemittel verschlechtert wird. In allen diesen Fällen können die außergewöhnlichen Umstände dazu führen, dass die Verdichter jeweils über einen sehr langen Zeitraum arbeiten müssten, um die jeweils notwendige Temperatur in der Kältezone wieder herstellen zu können. Geht man von Normalbedingungen aus, so arbeitet jeder Verdichter in einem bestimmten Arbeitszyklus. Beispielsweise arbeitet der Verdichter in einem Zyklus über eine Dauer von 20 % der Zykluszeit und ist über die restlichen 80 % der Zykluszeit ausgeschaltet. Die Zeitspanne, in der der Verdichter arbeitet wird als relative Einschaltdauer bezeichnet. Geht man nun davon aus, dass in einem Kältegerät mit zwei Verdichtern jeder der Verdichter über 20 % der Zykluszeit arbeitet, ergibt sich bei Normalbedingungen eine relative Einschaltdauer von 40 %, wenn die Verdichter nicht gleichzeitig sondern nacheinander betrieben werden.

Treten nun außerordentliche Bedingungen auf, so steigt die relative Einschaltdauer an. Dies ist so lange möglich bis die relative Einschaltdauer 100 % erreicht. Müssten die Verdichter noch länger betrieben werden um die notwendige Temperatur in den Kältezonen zu erreichen, so ist ein zeitlich getrennter Betrieb der beiden Verdichter nicht mehr möglich. Die Steuerung schaltet in diesem Fall erfindungsgemäß aus dem Normalmodus in einen anderen Arbeitsmodus um. In diesem anderen Arbeitsmodus ist ausnahmsweise der Betrieb beider Verdichter gleichzeitig gestattet. Durch diese Maßnahme ist gewährleistet, dass das Kältegerät mit möglichst wenig Vibrationen und geringem Geräuschpegel betrieben wird wobei trotzdem sichergestellt ist, dass auch in Ausnahmesituationen die notwendige Temperatur in den Kältezonen erreicht wird und keine Ware verderben kann.

Kältegeräte sind heute oftmals mit einer Abtauautomatik ausgestattet. Der Abtauvorgang wird dann gestartet, wenn die Eisschicht auf dem Verdichter eine bestimmte Stärke erreicht hat. Dies wird auf unterschiedliche Weise ermittelt und ist für die Erfindung nicht maßgebend. Damit während des Abtauvorgangs die entsprechende Kältezone nicht maßgeblich erwärmt wird ist der Verdampfer üblicherweise in einer separaten Kammer vorgesehen, wobei zwischen der Verdampferkammer und der Kältezone über einem Ventilator ein Luftaustausch stattfindet. Während des Abtauvorganges wird der Ventilator abgeschaltet, so dass in dieser Zeit keine Luft zwischen Verdampferkammer und Kältezone ausgetauscht wird. Weiterhin wird während des Abtauvorganges der Verdampfer beheizt, so dass das Eis abschmilzt. Die Abtauzeit ist von der Dicke der Eisschicht abhängig. Auch der Abtauvorgang kann zu außergewöhnlichen Bedingungen führen. Überschreitet die Abtauzeit die übliche Ausschaltzeit des Verdichters, so steigt die Temperatur in der betroffenen Kältezone über die Temperatur an, bei der die Steuerung den Verdichter wieder in Betrieb setzen müsste bis wieder Normalbedingungen hergestellt sind. Gemäß dem Verfahren zur Steuerung des Kältegeräts wird eine Kältezone priorisiert. Bei der priorisierten Kältezone handelt es sich üblicherweise um das Gefrierfach. Tritt nun in beiden Kältezonen gleichzeitig ein Kältebedarf auf, d.h., dass in beiden Kältezonen etwa gleichzeitig die Temperatur erreicht wird, bei der die Steuerung den Verdichter in Betrieb setzt, so startet die Steuerung zuerst den für das Gefrierfach zuständigen Verdichter. Auf diese Weise wird verhindert, dass in dem Gefrierfach eingelagerte Ware antauen kann und somit Schaden nimmt. Es wird stattdessen in Kauf genommen, dass in dem Kühlfach die Temperatur kurzzeitig über die eingestellte Temperatur ansteigt. Aufgrund dieser nur kurzzeitig erhöhten Temperatur wird es hier jedoch nicht zu einer Schädigung der Ware kommen.

Um die Temperatur in dem Kühlfach jedoch nicht zu stark ansteigen zu lassen ist eine maximale Wechselzeit vorgesehen, für die der Verdichter des Gefrierfaches betrieben wird. Selbst wenn in dieser maximalen Wechselzeit die Temperatur im Gefrierfach nicht die Abschalttemperatur für den Verdichter erreicht hat, wird der Verdichter für das Gefrierfach ab- und der Verdichter für das Kühlfach eingeschaltet. Auch dieser Verdichter wird nun nur für die maximale Wechselzeit betrieben. Danach wird wieder auf den Verdichter für das Gefrierfach umgeschaltet. Bei Normalbedingungen wird auf diese Weise langsam ein Zustand erreicht, bei dem der Kältebedarf für das Gefrierfach und der Kältebedarf für das Kühlfach nacheinander anfallen.

Weitere Einzelheiten und Vorteile der Erfindung ergeben sich aus den Unteransprüchen im Zusammenhang mit der Beschreibung von Ausführungsbeispielen die anhand der Zeichnungen eingehend erläutert werden.

Es zeigt:
- Fig. 1: eine schematische Darstellung einer Kühl-Gefrier-Kombination und
- Fig. 2: verschiedene Diagramme von Verdichterzyklen.

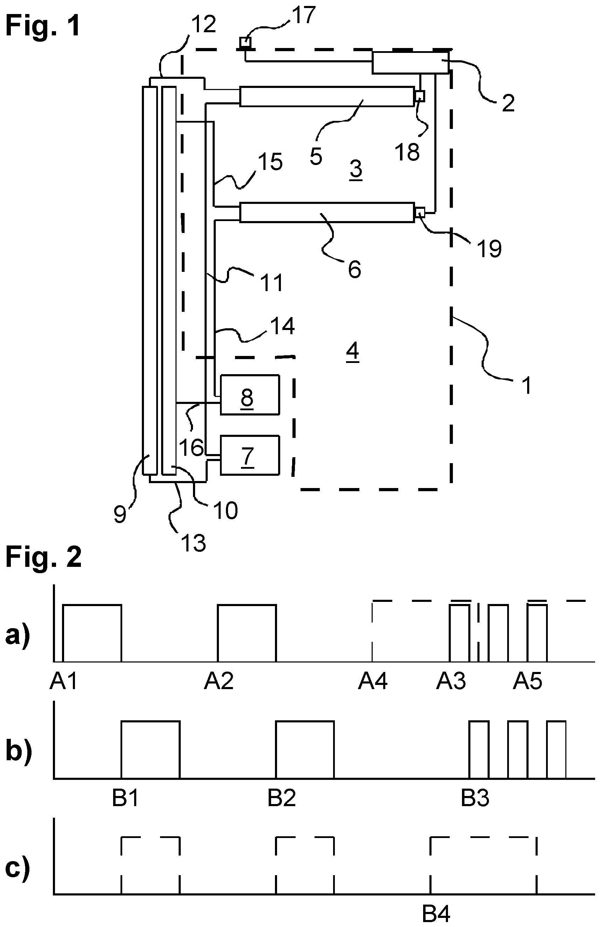

Die in Fig. 1 gezeigte Kühl-/Gefrier-Kombination 1 weist ein Gefrierfach 3 und ein Kühlfach 4 auf. In beiden Kältezonen 3, 4 ist jeweils ein eigener Kältemittelkreislauf zugeordnet. Der Gefrierfachverdampfer 5 wird über die Leitung 12 mit Kühlmittel aus dem Gefrierfachverflüssiger 9 versorgt. Das erwärmte Kühlmittel wird über die Leitung 12 dem Gefrierfachverdichter zugeführt und strömt letztendlich über die Leitung 13 wieder in den Gefrierfachverflüssiger. Ein entsprechender Kühlmittelkreislauf für das Kühlfach 4 enthält die Leitung 15 zum Kühlfachverdampfer, im Kühlfachverdampfer 6, die Leitung 14 zum Kühlfachverdichter, den Kühlfachverdichter 8, die Leitung 16 zum Kühlfachverflüssiger, und den Kühlfachverflüssiger 10.

Um den Gefrierfachverdichter 7 und den Kühlfachverdichter 8 zu steuern ist die Steuerung 2 vorgesehen. Die Regelung der Gefrierfach- bzw. Kühlfachtemperatur erfolgt über die von dem Gefrierfachsensor 18 bzw. Kühlfachsensor 19 ermittelte Temperatur. Damit auch die Außentemperatur bei der Steuerung der Kühl-/Gefrier-Kombination 1 berücksichtigt werden kann, ist weiterhin der Außensensor 17 mit der Steuerung 2 verbunden.

In Fig. 2 sind nun verschiedene Verdichterzyklen aufgezeigt, an denen die Erfindung weiter erläutert werden soll. In Fig. 2 a) ist der Verdichterzyklus des Gefrierfachverdichters 7 für einen ersten beispielhaften Ablauf durchgezogen gezeichnet. Die Fig. 2 b) zeigt den dazugehörigen Verdichterzyklus des Kühlfachverdichters 8. Ein kompletter Verdichterzyklus beginnt zum Zeitpunkt A1 und endet zum Zeitpunkt A2. Zu diesem Zeitpunkt wird die Steuerung im Normalmodus betrieben. Die Zykluszeit A1/A2 ist so bemessen, dass die Laufzeit des Gefrierfachverdichters 7 in Summe mit der Laufzeit des Kühlfachverdichters 8 in jedem Fall kleiner als die Zykluszeit A1/A2 ist. Erfindungsgemäß startet in diesem Normalmodus zuerst der priorisierte Gefrierfachverdichter 7. Nach der vorgesehenen Laufzeit schaltet dieser wieder ab. Erst zum Zeitpunkt B1 der entweder mit dem Laufzeitende des Gefrierfachverdichters 7 zusammenfällt oder kurz danach liegt, startet der Kühlfachverdichter 8. Hierdurch ist gewährleistet, dass beide Verdichter 7, 8 im Normalmodus der Steuerung nicht zusammen sondern nacheinander betrieben werden. Durch diese Maßnahme lässt sich die Lärm- und Vibrationsbelastung enorm reduzieren. Nach dem Ende der Laufzeit des Kühlfachverdichters 8 verbleibt noch bis zum Beginn der neuen Zykluszeit zum Zeitpunkt A2 ein Zeitraum in dem keiner der beiden Verdichter 7, 8 betrieben wird und der sich im Normalmodus der Steuerung noch für längere Verdichterlaufzeiten bei geänderten Bedingungen nutzen läßt.

Über hier nicht gezeigte Erfassungsmittel stellt die Steuerung 2 nun fest, dass sich auf beiden Verdampfern 5, 6 eine Eisschicht gebildet hat, die einen Abtauvorgang erfordert. Die Steuerung 2 schaltet daher aus dem Normalmodus in einen Abtaumodus. Der Gefrierfachverdichter wird daher nach dem Ende der zum Zeitpunkt A2 begonnenen Laufzeit geheizt. Zum Zeitpunkt A3 stellt die Steuerung fest, dass die Eisschicht beseitigt ist und der Gefrierfachverdampfer 7 wieder betrieben werden kann.

Der Abtauvorgang für den Kühlfachverdampfer 6 wird nach dem Ende der Laufzeit des Kühlfachverdichters 8 begonnen, die zum Zeitpunkt B2 gestartet wurde. In dem hier beschriebenen beispielhaften Ablauf hat sich auf dem Kühlfachverdampfer 6 eine Eisstärke geringerer Dicke als auf dem Gefrierfachverdampfer 5 gebildet. Der Abtauvorgang kann deshalb nach kürzerer Zeit ebenfalls zum Zeitpunkt A3 beendet werden.

In beiden Kältezonen 3, 4 stellt die Steuerung fest, dass die Temperatur während des Abtauvorgangs stark angestiegen ist, so dass beide Verdichter 7, 8 sofort eingeschaltet werden müssten, um keinen Schaden an den eingelagerten Waren zu riskieren. Da die Gefahr einer Schädigung im Gefrierfach 3 jedoch höher eingeschätzt wird als im Kühlfach 4, wird zuerst der priorisierte Gefrierfachverdichter 7 in Betrieb gesetzt. Um wieder die gewünschte Gefrierfachtemperatur zu erreichen, müsste der Gefrierfachverdichter über einen Zeitraum betrieben werden der zwar länger als die Betriebszeit vor dem Abtauvorgang ist, jedoch in Summe mit der ebenfalls längeren notwendigen Betriebszeit des Kühlraumverdichters 8 noch geringer als die vorgesehene Zykluszeit A1/A2 ist. Um nun aber möglichst umgehend die Temperatur im Kühlfach 4 ebenfalls wieder senken zu können, wird der Gefrierfachverdichter 7 nach kurzer Zeit wieder aus- und statt dessen der Kühlfachverdichter 8 eingeschaltet. Auch dieser wird jedoch nicht für die volle notwendige Laufzeit betrieben sondern ebenso nach kurzer Zeit wieder ausgeschaltet und statt dessen wieder der Gefrierfachverdichter 7 in Kraft gesetzt. Dies abwechselnde in Gang setzen der beiden Verdichter 7, 8 geschieht so lange, bis für beide die notwendige Laufzeit erreicht ist. Danach schaltet die Steuerung wieder in den Normalmodus. Auch in dem hier beschriebenen Abtaumodus wird erreicht, dass trotz geänderter Bedingungen die Verdichter niemals gemeinsam betrieben werden. Auch in diesem Modus treten daher keine hohen Lärm- und Vibrationsbelastungen auf.

Mit den gestrichelten Linien in Fig. 2 a) und Fig. 2 c) ist ein weiterer beispielhafter Ablauf aufgezeigt. Bis zum Ende der zweiten Zykluszeit A2/A4 betreibt die Steuerung 2 die Verdichter 7, 8 im Normalmodus. Zum Zeitpunkt A4 stellt die Steuerung jedoch über den Außensensor 17 fest, dass die Außentemperatur mehr als 30 °C beträgt. Bei dieser Außentemperatur würden die Laufzeiten der Verdichter 7, 8 so weit verlängert werden müssen, dass die Summe der Laufzeiten größer als die vorgesehene Zykluszeit wäre. Die Steuerung schaltet zu diesem Zeitpunkt in einen Parallelmodus um, in dem ausnahmsweise auch der Betrieb beider Verdichter 7, 8 gleichzeitig erlaubt ist. Die Steuerung ist jedoch so aufgebaut, dass auch in diesem Modus die Überschneidung der Laufzeiten möglichst gering ist. So wird zum Beginn der Zykluszeit A4 der Gefrierfachverdichter 7 in Betrieb gesetzt. Noch währenddessen Laufzeit zum Zeitpunkt B4 wird der Kühlfachverdichter 8 dazugeschaltet. Der Zeitpunkt B4 ist so gewählt, dass die Laufzeit des Kühlfachverdichters 8 zum Beginn der nächsten Zykluszeit A5 beendet ist. Die Überschneidung der beiden Laufzeiten betrifft folglich nur den Zeitraum von Beginn der Laufzeit des Kühlfachverdichters 8 B4 bis zum Ende der Laufzeit des Gefrierfachverdichters 7. Auf diese Weise ist gewährleistet, dass auch bei außergewöhnlichen Bedingungen die Lärm- und Vibrationslast möglichst gering bleiben und nur für einen kurzen Zeitraum erhöht sind.

In diesen Parallelmodus kann die Steuerung immer dann umschalten, wenn die Summe der Laufzeiten der Verdichter 7, 8 die Zykluszeit überschreiten würde. Dies muss nicht nur aufgrund einer hohen Außentemperatur passieren sondern kann ebenso vorkommen, wenn auf einmal eine große Menge warmer Ware in das Gefrierfach oder das Kühlfach eingelagert wird. Auch in einem solchen Fall schaltet die Steuerung für einen begrenzten Zeitraum in den Parallelmodus um.

### Bezugszeichenliste:

- 1: Kühl-Gefrier-Kombination
- 2: Steuerung
- 3: Gefrierfach
- 4: Kühlfach
- 5: Gefrierfachverdampfer
- 6: Kühlfachverdampfer
- 7: Gefrierfachverdichter
- 8: Kühlfachverdichter
- 9: Gefrierfachverflüssiger
- 10: Kühlfachverflüssiger
- 11: Leitung zum Gefrierfachverdichter
- 12: Leitung zum Gefrierfachverdampfer
- 13: Leitung zum Gefrierfachverflüssiger
- 14: Leitung zum Kühlfachverdichter
- 15: Leitung zum Kühlfachverdampfer
- 16: Leitung zum Kühlfachverflüssiger
- 17: Außensensor
- 18: Gefrierfachsensor
- 19: Kühlfachsensor

## Patentansprüche

1. Kältegerät (1) mit einem Innenraum der in wenigstens zwei Kältezonen (3, 4) unterteilt ist, wobei jede Kältezone (3, 4) durch einen Verdampfer (5, 6) gekühlt wird und wobei wenigstens zwei Verdichter (7, 8) für die Versorgung der Verdampfer (5, 6) mit einem Kältemittel vorgesehen sind, mit einer Steuerung (2) zum Betreiben der Verdichter (7, 8), wobei die Steuerung (2) in Abhängigkeit von vorbestimmten Bedingungen in unterschiedlichen Arbeitsmoden betreibbar ist und wobei ein Normalmodus vorgesehen ist, in dem die wenigstens zwei Verdichter (7, 8) ausschließlich zeitlich getrennt betrieben werden, **dadurch gekennzeichnet, dass** die wenigstens zwei Kältezonen als Gefrierfach (3) und als Kühlfach (4) ausgebildet sind, wobei für jede Kältezone (3, 4) ein separater Kältemittelkreislauf mit Verdichter (7, 8), Verdampfer (5, 6) und Verflüssiger (9, 10) vorgesehen ist.

2. Kältegerät nach Anspruch 1, **dadurch gekennzeichnet, dass** die Steuerung (2) mit je einem Temperatursensor (18, 19) in dem Gefrierfach (3) und in dem Kühlfach (4) verbunden ist.

3. Kältegerät nach Anspruch 1, **dadurch gekennzeichnet, dass** die Steuerung (2) mit einem Sensor (17) zur Erfassung der Außentemperatur verbunden ist und dass ein Grenzwert der Außentemperatur als eine vorbestimmte Bedingung gesetzt ist.

4. Kältegerät nach Anspruch 3, **dadurch gekennzeichnet, dass** die Steuerung (2) den Normalmodus verlässt, wenn die Außentemperatur den Grenzwert von 30°C übersteigt.

5. Kältegerät nach Anspruch 1, **dadurch gekennzeichnet, dass** die Summe der relativen Einschaltdauern der Verdichter (7, 8) als vorgegebene Bedingung gesetzt ist und dass die Steuerung (2) den Normalmodus verlässt wenn die relative Einschaltdauer der Verdichter in Summe die 100%-Grenze übersteigt.

6. Kältegerät nach Anspruch 1, **dadurch gekennzeichnet, dass** die Abtauzeit als vorbestimmte Bedingung gesetzt ist und dass die Steuerung (2) den Normalmodus verlässt wenn die Abtauzeit eines Verdampfers (5, 6) einen vorbestimmten Grenzwert überschreitet.

7. Verfahren zum Steuern eines Kältegeräts (1) mit wenigstens zwei Kältezonen (3, 4) und zwei Verdichtern (7, 8), wobei für jede Kältezone (3, 4) ein separater Kältemittelkreislauf mit Verdichter (7, 8), Verdampfer (5, 6) und Verflüssiger (9, 10) vorgesehen ist und die Verdichter (7, 8) bei vorbestimmten Bedingungen zeitlich getrennt betrieben werden und bei Überschreitung der jeweiligen Bedingungsgrenze zeitlich miteinander betrieben werden, **dadurch gekennzeichnet, dass** bei gleichzeitigem Kältebedarf der wenigstens zwei Kältezonen (3, 4) eine Kältezone (3) priorisiert und zuerst der für die priorisierte Kältezone (3) vorgesehene Verdichter (7) betrieben wird.

8. Verfahren nach Anspruch 7, **dadurch gekennzeichnet, dass** der Verdichter (7) für die priorisierte Kältezone (3) nicht länger als eine vorbestimmte maximale Wechselzeit betrieben wird und danach der Verdichter für die nicht priorisierte Kältezone (4) betrieben wird.

## Claims

1. Refrigeration appliance (1) with an interior, which is divided into at least two refrigeration zones (3, 4), wherein each refrigeration zone (3, 4) is cooled by an evaporator, (5, 6) and wherein at least two compressors (7, 8) are provided to supply the evaporators (5, 6) with refrigerant, with a controller (2) for operating the compressors (7, 8), wherein the controller (2) can be operated in different operating modes as a function of predetermined conditions and wherein provision is made for a normal mode, in which the at least two compressors (7, 8) are operated exclusively at different times, **characterised in that** the at least two refrigeration zones are configured as a freezer compartment (3) and a refrigerator compartment (4), wherein a separate refrigerant circuit with a compressor (7, 8), evaporator (5, 6) and condenser (9, 10) is provided for each refrigeration zone (3, 4).

2. Refrigeration appliance according to claim 1, **characterised in that** the controller (2) is connected to a temperature sensor (18, 19) in the freezer compartment (3) and refrigerator compartment (4) respectively.

3. Refrigeration appliance according to claim 1, **characterised in that** the controller (2) is connected to a sensor (17) for capturing the external temperature and a limit value for the external temperature is set as a predetermined condition.

4. Refrigeration appliance according to claim 3, **characterised in that** the controller (2) switches out of normal mode when the external temperature exceeds the limit value of 30°C.

5. Refrigeration appliance according to claim 1, **characterised in that** the sum of the relative activation periods of the compressors (7, 8) is set as a predefined condition and the controller (2) switches out of normal mode when the relative activation period of the compressors in total exceeds the 100% limit.

6. Refrigeration appliance according to claim 1, **characterised in that** the defrost time is set as a predetermined condition and the controller (2) switches out of normal mode when the defrost time of an evaporator (5, 6) exceeds a predetermined limit value.

7. Method for controlling a refrigeration appliance (1) with at least two refrigeration zones (3, 4) and two compressors (7, 8), wherein a separate refrigerant circuit with a compressor (7, 8), evaporator (5, 6) and condenser (9, 10) is provided for each refrigeration zone (3, 4) and the compressors (7, 8) are operated at different times in predetermined conditions and can be operated at the same time if the respective conditional limit is exceeded, **characterised in that** when the at least two refrigeration zones (3, 4) have a simultaneous refrigeration requirement, one refrigeration zone (3) is prioritised and the compressor (7) provided for the prioritised refrigeration zone (3) is operated first.

8. Method according to claim 7, **characterised in that** the compressor (7) for the prioritised refrigeration zone (3) is not operated for longer than a predetermined maximum changeover time and the compressor for the non-prioritised refrigeration zone (4) is then operated.

## Revendications

1. Appareil frigorifique (1) avec un espace intérieur subdivisé en au moins deux zones froides (3, 4), dans lequel chaque zone froide (3, 4) est réfrigérée par un évaporateur (5, 6) et dans lequel au moins deux compresseurs (7, 8) sont prévus pour l'alimentation des évaporateurs (5, 6) en un agent frigorifique, avec une commande (2) pour l'exploitation des compresseurs (7, 8), dans lequel la commande (2) est exploitable selon des modes de fonctionnement différents en fonction de conditions déterminées au préalable et dans lequel une mode normal est prévu, dans lequel les au moins deux compresseurs (7, 8) sont exclusivement exploités de manière temporellement séparée, **caractérisé en ce que** les au moins deux zones froides sont exécutées sous forme de compartiment de congélation (3) et sous forme de compartiment de réfrigération (4), un circuit d'agent frigorifique distinct avec compresseur (7, 8), évaporateur (5, 6) et condenseur (9, 10) étant prévu pour chaque zone froide (3, 4).

2. Appareil frigorifique selon la revendication 1, **caractérisé en ce que** la commande (2) est reliée à un capteur de température (18, 19) dans le compartiment de congélation (3) et dans le compartiment de réfrigération (4).

3. Appareil frigorifique selon la revendication 1, **caractérisé en ce que** la commande (2) est reliée à un capteur (17) pour la saisie de la température extérieure et **en ce qu'**une valeur limite de la température extérieure est fixée comme condition déterminée au préalable.

4. Appareil frigorifique selon la revendication 3, **caractérisé en ce que** la commande (2) quitte le mode normal lorsque la température extérieure excède la valeur limite de 30° C.

5. Appareil frigorifique selon la revendication 1, **caractérisé en ce que** la somme des durées d'actionnement relatives des compresseurs (7, 8) est fixée comme condition déterminée au préalable et **en ce que** la commande (2) quitte le mode normal lorsque la durée d'actionnement relative des compresseurs excède au total la limite de 100%.

6. Appareil frigorifique selon la revendication 1, **caractérisé en ce que** la durée de dégivrage est fixée comme condition déterminée au préalable et **en ce que** la commande (2) quitte le mode normal lorsque la durée de dégivrage d'un évaporateur (5, 6) excède une valeur limite déterminée au préalable.

7. Procédé de commande d'un appareil frigorifique (1) avec au moins deux zones froides (3, 4) et deux compresseurs (7, 8), dans lequel un circuit d'agent frigorifique distinct avec compresseur (7, 8), évaporateur (5, 6) et condenseur (9, 10) est prévu pour chaque zone froide (3, 4) et les compresseurs (7, 8) sont exploités de manière temporellement séparée en présence de conditions déterminées au préalable et sont exploités de manière temporellement conjointe en cas de dépassement de la limite de condition respective, **caractérisé en ce qu'**en présence d'un besoin de froid concomitant des aux moins deux zones froides (3, 4), une zone froide (3) est priorisée et le compresseur (7) prévu pour la zone froide priorisée (3) est d'abord exploité.

8. Procédé selon la revendication 7, **caractérisé en ce que** le compresseur (7) pour la zone froide priorisée (3) n'est pas exploité plus longtemps qu'une durée d'alternance maximale déterminée au préalable et le compresseur pour la zone froide non priorisée (4) est exploité ensuite.
